# EUROPÄISCHE PATENTSCHRIFT

(11) **EP 2 557 346 B1**
(45) Veröffentlichungstag und Bekanntmachung des Hinweises auf die Patenterteilung: **20.01.2016**
(21) Anmeldenummer: 12005438.2
(22) Anmeldetag: 26.07.2012
(51) Int. Cl.: F16L 19/025

(54) **Schraubkupplung zum lösbaren Verbinden von Hochdruckhydraulikleitungen**
Raccord à vis pour la liaison amovible de conduites hydrauliques haute pression
Screw coupling for a detachable connection of high pressure hydraulic lines

(30) Priorität: 11.08.2011 DE 202011104255 U
(43) Veröffentlichungstag der Anmeldung: 13.02.2013
(73) Patentinhaber: Voswinkel Entwicklungs- und Verwaltungs-GmbH & Co. KG, 58540 Meinerzhagen (DE)
(72) Erfinder: Schmitt, Frank, 58540 Meinerzhagen (DE)
(74) Vertreter: Buse, Mentzel, Ludewig Patentanwaltskanzlei

(56) Entgegenhaltungen:
- EP-A1- 2 136 119
- DE-A1- 4 207 958
- GB-A- 266 422
- US-A- 2 251 718

## Beschreibung

Die Erfindung bezieht sich auf eine Schraubkupplung zum lösbaren Verbinden von Hydraulikleitungen, insbesondere von Hochdruckhydraulikschläuchen. Die Schraubkupplung umfasst zwei Kupplungselemente, die jeweils mit einer Hydraulikleitung verbunden werden können. Zur fluiddichten Verbindung der Kupplungselemente der Schraubkupplung ist an einem Kupplungselement ein Außengewinde vorgesehen, welches mit einem Innengewinde einer am anderen Kupplungselement beweglich gelagerten Mutter zusammenwirkt.

An eine fluiddichte Schraubkupplung werden hinsichtlich der mechanischen und thermischen Eigenschaften sowie der Korrosionsbeständigkeit hohe Ansprüche gestellt. Solche Schraubkupplungen lassen sich bei großen Nennweiten, d.h. bei großen Innendurchmessern der Hydraulikschläuche bis zu Drücken von 100 bar sicher einsetzen. Bei kleineren Nennweiten können diese bekannten Schraubkupplungen bis zu Drücken von 500 bar bis 600 bar eingesetzt werden. Derartige Schraubkupplungen werden insbesondere aus Stahlwerkstoffen hergestellt und besitzen damit aufgrund des verwendeten Stahlmaterials gute mechanische Eigenschaften, um den auftretenden Belastungen bei der Verwendung der Schraubkupplung für Hochdruckhydraulikleitungen, nämlich den hohen Zugkräften, Druckkräften, Biegekräften und Torsionskräften, standhalten zu können. Umfasst eine Schraubkupplung ein erstes Kupplungselement mit einem Innenkonus und ein zweites Kupplungselement mit einem Ansatz, welcher in seiner Form und in seinen Maßen an den Innenkonus des ersten Kupplungselementes angepasst ist und besitzen Innenkonus und Ansatz glatte Oberflächen, so dichten die metallischen Kupplungselemente ohne zusätzliche Dichtungen gegeneinander ab, insbesondere wenn sie mittels einer Schraubverbindung aneinander gepresst werden und somit der Ansatz formschlüssig im Innenkonus aufgenommen wird. Der feste Sitz der Schraubverbindung wird mit Hilfe eines Drehmomentschlüssels kontrolliert. Eine dauerhafte Abdichtung wird erzielt, wenn die bei der Schraubverbindung aufgebrachte Vorspannkraft erhalten bleibt, d.h. sich der Ansatz im Innenkonus gesetzt hat.

Neben mechanischen Eigenschaften muss eine Schraubkupplung für Hydraulikleitungen auch eine ausreichende Korrosionsbeständigkeit aufweisen. Um bei Schraubkupplungen aus Stahl Korrosionsprobleme zu verhindern, wurden in der Vergangenheit Schraubkupplungen verzinkt und chromatiert. Der Korrosionsschutz des Zinks beruht darauf, dass Zink unedler ist als Stahl und als Opferschicht fungiert. Solange noch eine durchgehende Zinkschicht auf einem Schraubkupplungsteil vorhanden ist, bleibt das aus Stahl bestehende Kupplungsteil unversehrt. Ein korrosiver Angriff auf das Zink wird durch eine Chromatierungsschicht zusätzlich verzögert. In vielen Anwendungsbereichen sind Chromatierungen mit krebserregenden Chrom(VI)-haltigen Stoffen jedoch nicht mehr zulässig. Wird die Zinkschicht allein, d.h. ohne Chromatierung, vorgesehen, ist ein dauerhafter Korrosionsschutz nicht gewährleistet. Es sind verschiedene Chrom(VI)-freie Beschichtungsalternativen bekannt, die bei Schraubkupplungen ebenfalls nicht zu der geforderten Korrosionsbeständigkeit führen.

Bekannt ist es des Weiteren anstatt der Zinkschichten eine Zink-Nickel-Legierungsschicht vorzusehen. Diese Zink-Nickel-Legierungsschicht zeigt bereits ohne Passivierung eine sehr gute Korrosionsbeständigkeit. Das Dokument EP 2136119 A1 offenbart eine solche Korrosionsschutzbeschichtung für Schraubfittings, wobei im Bereich der Dichtflächen zusätzlich eine Beschichtung mit einem niedrigeren Reibwert vorgesehen wird. Dies soll ein Lockern der Schraubverbindung vermeiden. Ein Beschichten der aus Stahl bestehenden Kupplungselemente mit einer Zink-Nickel-Legierungsschicht führt jedoch nicht zu einer dauerhaften Abdichtung der Kupplungselemente. Versuche haben gezeigt, dass sich die unter Vorspannkraft verschraubten Kupplungselemente der Schraubkupplung nach längerem Gebrauch selbstständig voneinander lösen. Die Vorspannkraft bleibt nicht erhalten. Aufgabe der Erfindung ist es daher eine korrosionsbeständige Schraubkupplung zum lösbaren Verbinden von Hochdruckhydraulikleitungen zur Verfügung zu stellen, die zu einer dauerhaft abdichtenden Schraubverbindung zwischen den Kupplungselementen der Schraubkupplung führt.

Diese Aufgabe wird mit einer Schraubkupplung mit den Merkmalen des Anspruchs 1 gelöst. Eine solche Schraubkupplung besteht aus zwei Kupplungselementen aus Stahlwerkstoff. Ein Kupplungselement ist dabei jeweils direkt mit einer Hochdruckhydraulikleitung verbindbar oder aber indirekt über ein zusätzliches Anschluss- oder Verbindungsteil. Beispielsweise kann ein oder können beide Kupplungselemente an ihrem einem Ende einen Schlauchnippel besitzen, an dem jeweils ein Hochdruckhydraulikschlauch mittels einer Pressfassung befestigt wird. Zur Verbindung der beiden Kupplungselemente und damit der beiden Hydraulikschläuche sind an den Kupplungselementen Verbindungsmittel vorgesehen, die an dem Ende angeordnet sind, die dem Schlauchnippel oder einer anderen Verbindungsmöglichkeit mit dem Schlauch gegenüber liegen. Ein erstes Kupplungselement weist als Verbindungsmittel an seiner Außenseite ein Außengewinde auf, welches mit einem Innengewinde einer Mutter zusammenwirkt, die als Verbindungsmittel am anderen, zweiten Kupplungselement drehbeweglich gelagert ist. Zur Abdichtung der Verbindung besitzen die Kupplungselemente konusförmige Dichtflächen. Bei einem Kupplungselement, beispielsweise dem ersten Kupplungselement, ist eine Aufnahme mit einer konusförmigen Dichtfläche vorgesehen, d.h. eine Dichtfläche in Form eines Innenkonus, wobei sich der Durchmesser des Innenkonus in Richtung zur Stirnseite des Kupplungselementes vergrößert. In diese konusförmige Aufnahme greift beim abdichtenden Verbinden das andere, beispielsweise zweite Kupplungselement formschlüssig mit einem adäquaten Ansatz ein. Dieser Ansatz besitzt auf seiner Außenseite eine konusförmige Dichtfläche, wobei sich der Durchmesser des Ansatzes in Richtung zur Stirnseite des Kupplungselementes verkleinert. Beim Verbinden der Kupplungselemente wird der konusförmige Ansatz in die konusförmige Aufnahme eingesteckt und eine dauerhafte Abdichtung erzielt, wenn die vorgenannte Schraubverbindung vorliegt, d.h. nach dem Anziehen der Mutter.

Die Kupplungselemente bestehen aus einem Stahlwerkstoff und sind für eine erhöhte Korrosionsbeständigkeit mit einer Zink-Nickel-Legierungsschicht als Schutzschicht beschichtet, insbesondere sind auch die konusförmigen Dichtflächen sowie das Innen- und Außengewinde der Verbindungsmittel mit einer derartigen Beschichtung versehen. Die Zink-Nickel-Legierungsschicht zeigt eine Vickershärte von ca. 400HV. Als Schutz der Zink-Nickel-Legierungsschicht kommen bekannte, insbesondere Chrom(VI)-freie, Passivierungen in Frage, wie beispielsweise eine Chrom(III)-Passivierung. Nachfolgend wird bei den Zink-Nickel-Legierungsschichten nicht separat auf diese Passivierung hingewiesen, da für den Fachmann grundsätzlich die Passivierung Teil des Zink-Nickel-Beschichtungsvorgangs ist. Es wurde festgestellt, dass die raue Oberfläche der Zink-Nickel-Legierungsbeschichtung auf den Dichtflächen und Gewindeflächen beim Anziehen der Mutter nicht zu einem dauerhaften Abdichten der Schraubkupplung führt. Es zeigt sich nach dem Verschrauben, dass das aufgebrachte Drehmoment für die Schraubverbindung und die daraus resultierende Vorspannkraft nicht erhalten bleibt. Aufgrund dieser Tatsache kann sich der Ansatz des einen Kupplungselements nicht dauerhaft elastisch und/oder plastisch in der Aufnahme des anderen Kupplungselements setzen. Das mittels der Mutter aufgebrachte Drehmoment kann aufgrund der zwischen den Dichtflächen wirkenden Reibkraft nicht in eine ausreichend große Vorspannkraft umgesetzt werden. Durch Vibrationen, Schlauchbewegungen oder durch andere Einflüsse kann sich diese Schraubverbindung jedoch wieder lösen und die Schraubkupplung undicht werden. Dies wird bei der neuen Schraubkupplung dadurch verhindert, dass auf die raue Zink-Nickel-Legierungsschicht einer oder beider konusförmigen Dichtflächen sowie auf die Gewindeflächen des Innen- und Außengewinde der Verbindungsmittel eine Gleitschicht aufgebracht wird, insbesondere eine Gleitschicht aus einem oder mehreren natürlichen oder synthetischen Wachsen, wie beispielsweise Wachse aus der Gruppe der Polyethylenwachse. Weitere Beispiele geeigneter Wachse zur Ausführung der vorliegenden Erfindung sind Parafinwachse, Polypropylenwachse, Polybutylenwachse, einzeln oder in Mischungen sowie oxidiert, copolymerisiert oder modifiziert, beispielsweise durch das Einbringen polarer Gruppen. Neben diesen synthetischen Wachsen können auch tierische oder pflanzliche Wachse eingesetzt werden, wie beispielsweise Bienenwachs, Zuckerrohrwachs oder Carnaubawachs. Eine solche Wachsschicht füllt die raue Oberflächenstruktur der Zink-Nickel-Legierungsschicht aus und ergibt eine gleichmäßige Oberflächen auf den Dichtflächen. Diese Wachsschicht wirkt als Gleitschicht, setzt die Reibwerte zwischen den sich berührenden Dichtflächen und Gewindeflächen herab und führt dazu, dass die Vorspannkraft beim Herstellen der Schraubverbindung erhalten bleibt. Da auf diese Weise das durch Anziehen der Mutter aufgebrachte Drehmoment eine ausreichende Vorspannkraft ergibt, haben sich die konusförmigen Dichtflächen zueinander gesetzt. Somit hat das Drehmoment zu einer Vorspannkraft für die Schraubverbindung geführt, die dauerhaft erhalten bleibt. Dies konnte auch durch Versuche bestätigt werden.

Mit der neuen Beschichtung für die Dichtflächen und Gewindeflächen wird eine Schraubkupplung erhalten, die aufgrund der vorhandenen Zink-Nickel-Legierungsbeschichtung korrosionsbeständig ist und auch eine dauerhafte Abdichtung der miteinander verbundenen Kupplungselemente gewährleistet.

In bevorzugter Weise wird eine ZnNi(10-18)-Legierung, d.h. eine Zinklegierung mit 10 bis 18 Gew% Nickel, als Schutzschicht auf die Stahloberflächen aufgebracht. Besonders bevorzugt ist eine ZnNi(12-16)-Legierung mit 12 bis 16 Gew% Nickel. Es ist ausreichend, eine Schutzschicht mit einer Schichtdicke von 4 µm vorzusehen, vorzugsweise wird eine Schichtdicke zwischen 4 µm und 10 µm aufgebracht. Kupplungselemente mit einer solchen Zink-Nickel-Legierungsschicht zeigen eine gute Korrosionsbeständigkeit, insbesondere überstehen sie den Salzsprühtest nach DIN EN ISO 9927 über 500 Stunden unbeschadet.

Darüber hinaus kann im Bereich der Dichtflächen ein zusätzlicher Dichtring vorgesehen werden, der vorzugsweise an einer Dichtfläche vorfixiert wird. Zur Vorfixierung wird eine Ringnut, vorzugsweise am konusförmigen Ansatz, vorgesehen.

Die Erfindung wird nachfolgend an Ausführungsbeispielen erläutert. Die Zeichnung zeigt:
- Fig. 1a: einen Teilschnitt durch eine bekannte Schraubkupplung,
- Fig. 1b: eine Vergrößerung des Teilbereichs Y von Fig. 1a,
- Fig. 1c: eine perspektivische Absicht von Fig. 1a,
- Fig. 2a: einen Teilschnitt durch eine erfindungsgemäße Schraubkupplung,
- Fig. 2b: eine Vergrößerung des Teilbereichs Z von Fig. 2a,
- Fig. 2c: eine perspektivische Absicht von Fig. 2a.

Es wurden Schraubkupplungen 1, 1' aus dem gleichen Stahlwerkstoff verwendet und die Kupplungselemente 10, 20 der bekannten Schraubkupplung 1' und der erfindungsgemäßen Schraubkupplung 1, wie nachfolgend aufgeführt, unterschiedlich beschichtet.

### 1. Vergleichsbeispiel:

Die aus einem Stahlwerkstoff bestehenden Kupplungselemente einer nicht dargestellten Schraubkupplung wurden in bekannter Weise zur Erzielung der notwendigen Korrosionsbeständigkeit mit Zink beschichtet und anschließend chromatiert.

### 2. Vergleichsbeispiel:

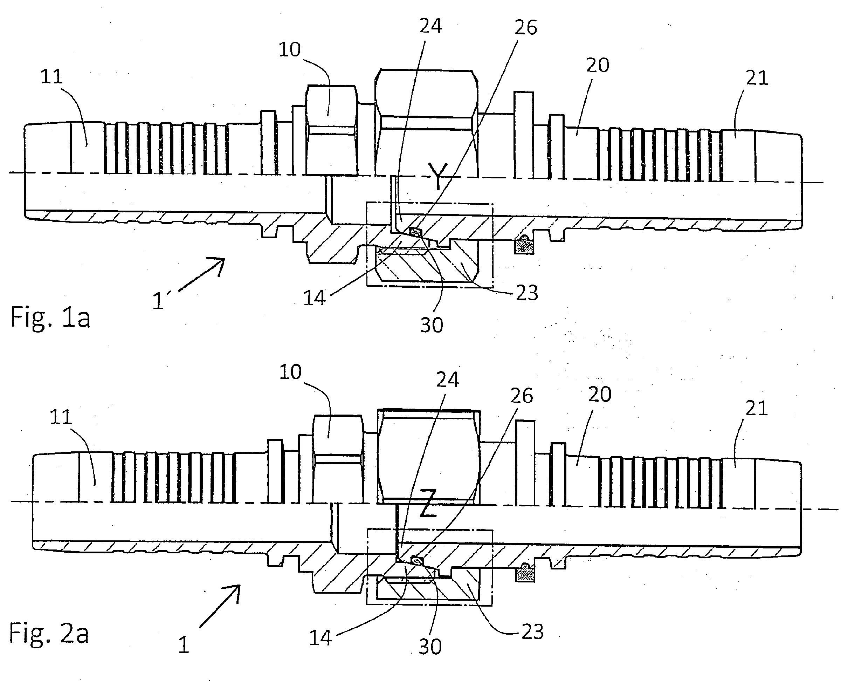

Die aus dem gleichen Stahlwerkstoff bestehenden Kupplungselemente 10, 20 einer Schraubkupplung 1', siehe Fig. 1a bis Fig. 1c, wurden mit einer Korrosionsschicht aus einer Zink-Nickel-Legierung mit 12 Gew% Ni durch alkalische Abscheidung beschichtet und passiviert. Die Schichtdicke betrug 8 µm. Der Reibungskoeffizient µ betrug 0,35.

### 3.Ausführungsbeispiel der Erfindung:

Die aus dem gleichen Stahlwerkstoff bestehenden Kupplungselemente 10, 20 einer Schraubkupplung 1, siehe Fig. 2a bis Fig. 2c, wurden mit einer Korrosionsschicht aus einer Zink-Nickel-Legierung mit 12 Gew% Ni durch alkalische Abscheidung beschichtet und passiviert. Die Schichtdicke betrug 8 µm. Der Reibungskoeffizient µ betrug 0,35. Anschließend wurde eine Wachsschicht aus Polyethylenwachs gleichmäßig auf die Dichtflächen und Gewindeflächen aufgebracht. Der Reibungskoeffizient µ betrug 0,1.

Es wurden jeweils 6 Schraubkupplungen mit jeder der drei vorbeschriebenen, verschiedenen Beschichtungen versehen und jeweils zwei gleich beschichtete Kupplungselemente 10, 20 durch eine Schraubverbindung miteinander verbunden. Das Anzugsdrehmoment für die Mutter 23 betrug in jedem Fall 120Nm. Der Kraftaufwand zum Lösen der Mutter 23, das Abbrechdrehmoment, wurde gemessen. Die in der nachfolgenden Tabelle angegebenen Werte für das Abbrechdrehmoment sind ein Mittelwert aus den gemessenen Werten von den jeweils 6 Schraubkupplungen.

**Tabelle:**

| Beschichtung | Anzugsdrehmoment in Nm | Abbrechdrehmoment in Nm |
|---|---|---|
| 1. **Vergleichsbeispiel:** Zink + Cr(VI)-Passivierung | 120 | 85,2 |
| 2. **Vergleichsbeispiel:** ZnNi-Legierung | 120 | 77,3 |
| 3. **erfindungsgemäße Beispiel:** ZnNi Legierung+ Wachs | 120 | 86,2 |

Aus den gemessenen Werten für das Abbrechdrehmoment wird deutlich, dass mit der neuen Beschichtung, nämlich mit einer ZnNi-Legierung und einer Wachsschicht auf den Dichtflächen und den Gewindeflächen eine gleich gute, dichtende Verbindung zwischen den beiden Kupplungselementen 10, 20 der Schraubkupplung 1 erzielt wird, wie bei der bekannten und bewährten Beschichtung gemäß dem Vergleichsbeispiel 1 mit der Beschichtung aus Zink und der Cr(VI)-Passivierung.

Die alleinige Beschichtung mit einer Zink-Nickel-Legierung führt zwar zu einem sehr guten Korrosionsbeständigkeit der beschichteten Schraubkupplung 1', aber nicht zu einer dauerhaft dichten Schraubverbindung.

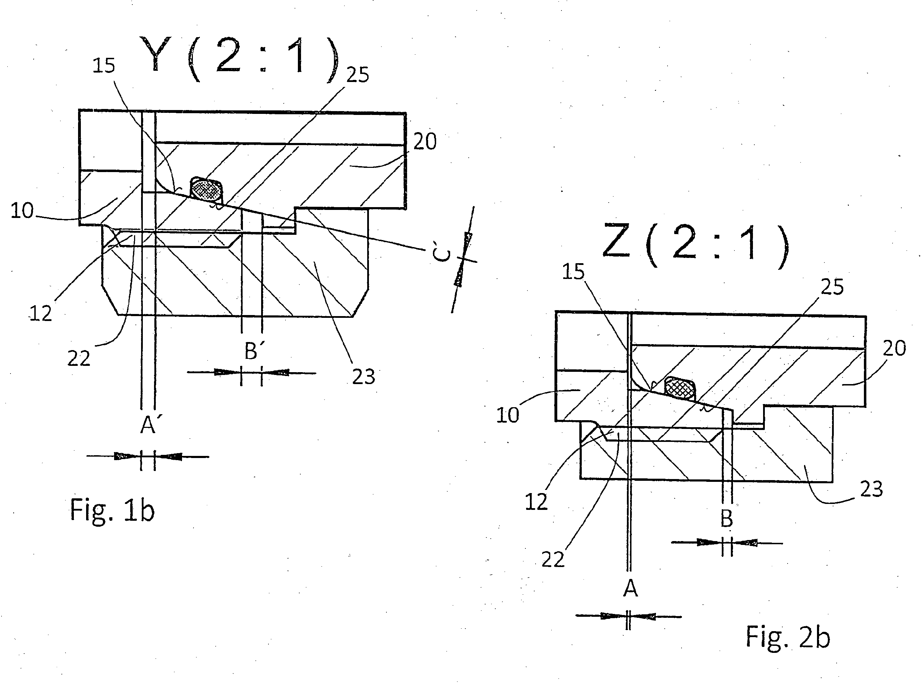

Die Schraubkupplungen 1, 1' bestehen aus den zwei Kupplungselementen 10, 20. An den Kupplungselementen 10, 20 kann jeweils ein Hochdruckhydraulikschlauch abgeschlossen werden. Dazu sind die Kupplungselemente 10, 20 an ihrem einen Ende in bekannter Weise zu einem Schlauchnippel geformt. Am gegenüberliegenden Ende werden die Kupplungselemente 10, 20 miteinander über eine Schraubverbindung verbunden. Das erste Kupplungselement 10 besitzt an seinem dem Schlauchnippel 11 gegenüber liegenden Ende an seiner Außenseite ein Außengewinde 12, welches mit dem Innengewinde 22 einer Mutter 23 zusammenwirkt, die drehbar an dem zweiten Kupplungselement 20 gelagert ist. Durch diese Schraubverbindung wird ein endseitig am zweiten Kupplungselement 20 vorgesehener Ansatz 24 in eine konusförmige Aufnahme 14 am ersten Kupplungselement eingepresst. Die Form und Maße des Ansatzes 24 sind an die Form und Maße der Aufnahme 14 angepasst. Ist der Ansatz 24 in die Aufnahme 14 eingepresst, so liegen die Außenseite des Ansatzes 14, nämlich die konusförmige Dichtfläche 25 des Ansatzes dichtend an der konusförmigen Dichtfläche 15 der Aufnahme 14 an. Dies wird verdeutlicht durch den Abstand C in der Fig. 1b. Der Abstand C hat bei beiden Schraubkupplungen 1, 1' den Wert 0. Zusätzlich ist am Ansatz 24 eine den Ansatz 24 umlaufende Ringnut 26 vorgesehen, in welcher ein Dichtring 30 positioniert werden kann.

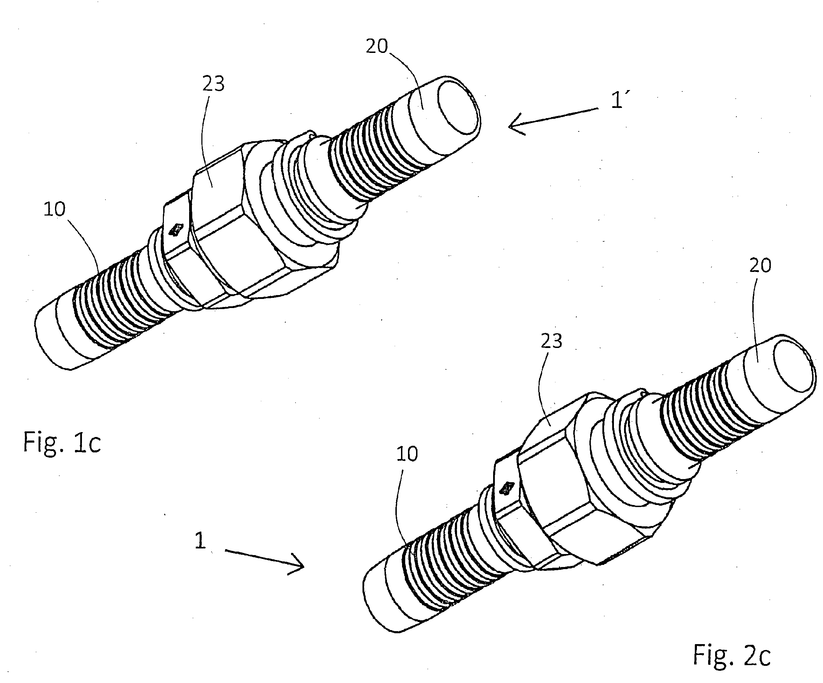

In der Fig. 1a ist die bekannte Schraubkupplung 1' mit den beiden Kupplungselementen 10, 20 zu sehen. Die Fig. 2 zeigt die erfindungsgemäß beschichtete Schraubkupplung 1. Für die gleichen Bauteile der Schraubkupplungen 1, 1' wurden die gleichen Bezugszeichen verwendet. Es wird aus der Fig. 1b und Fig. 2b deutlich, dass bei gleichem Anzugsdrehmoment von 120 Nm das Kupplungselement 20 der Schraubkupplungen 1, 1' unterschiedlich tief im Kupplungselemente 10 eingesteckt und durch die Schraubverbindung 12, 22 gesichert ist.

Die Kupplungselemente 10, 20 der Schraubkupplung 1', die Dichtflächen 15, 25 besitzen, die nur mit der Zink-Nickel-Legierung beschichtet sind, zeigen nach dem Anziehen der Mutter 22 zwar eine dichte Verbindung, diese Verbindung kann sich jedoch durch Vibrationen oder andere Einflüsse wieder lösen, da sich der Ansatz 24 in der Aufnahme 14 nicht gesetzt hat. Diese Verbindung ist damit nicht dauerhaft dichtend. Betrachtet man in Fig. 1b die Spaltbreiten A' und B' zwischen den Kupplungselementen 10, 20, nämlich die Spaltbreite A' = 1mm zwischen der Stirnseite des Ansatzes 24 des zweiten Kupplungselementes 20 und dem Ende der Aufnahme 14 des ersten Kupplungselementes 10 sowie die Spaltbreite B' = 1,5mm zwischen dem Ende des Ansatzes 24 des zweiten Kupplungselementes 20 und der Stirnseite des ersten Kupplungselementes 10 und vergleicht man diese Spaltbreite A' und B' mit den Spaltbreiten A und B bei der gesetzten Schraubkupplung 1 in Fig. 2b mit der Spaltbreite A = 0,25mm zwischen der Stirnseite des Ansatzes 24 des zweiten Kupplungselementes 20 und dem Ende der Aufnahme 14 des ersten Kupplungselementes 10 sowie der Spaltbreite B = 0,75mm zwischen dem Ende des Ansatzes 24 des zweiten Kupplungselementes 20 und der Stirnseite des ersten Kupplungselementes 10, so wird deutlich dass das gleiche Anzugsdrehmoment bei der Schraubkupplung 1' mit der Zink-Nickel-Schicht nicht zum Setzen geführt hat, sondern durch die hohen Reibwerte zwischen den mit der ZnNi-Legierung beschichteten Dichtflächen und insbesondere an den Zahnflanken der Gewindeflächen geht bei der Verbindungsbildung ein Teil der Vorspannkraft für das Setzen der Schraubverbindung verloren. Betrachtet man eine Vergrößerung der Oberfläche ohne Wachs, so wird eine sehr raue Oberfläche der Zink-Nickel-Legierungsschicht, wie sie auf den Dichtflächen 15, 25 und auch im Bereich der Gewindegänge der Gewinde 12, 22 der Schraubkupplung 1' zu finden ist, sichtbar. Die Mikrorauigkeiten sind gut zu erkennen. Werden diese nur mit ZnNi-Legierung beschichteten rauen Dichtflächen 15, 25 gegeneinander gepresst, treten hohe Reibungen auf, wodurch ein Anteil der durch die Schraubverbindung aufgebrachten Vorspannkraft verbraucht wird.

Anders ist dies bei der erfindungsgemäßen Schraubkupplung 1, gezeigt in Fig. 2a, wo die Unebenheiten der rauen Zink-Nickel-Schicht auf den Dichtflächen 15, 25 mit dem zusätzlich aufgebrachten Wachs aufgefüllt und ausgeglichen werden. Betrachtet man eine Vergrößerung dieser Oberfläche eines Kupplungselementes 10 der Schraubkupplung 1 im Bereich des Außengewindes 12, so ist eine vergleichsweise glatte Oberfläche der mit Wachs beschichteten Oberflächen sichtbar. Wird die Mutter 23 mit dem ebenso beschichteten Innengewinde 22 auf das Außengewinde 12 gedreht, so gleiten zwei glatte Oberflächen übereinander. Beim gleichzeitigen Aufeinanderpressen der ebenso beschichteten Dichtflächen 15, 25 kann sich die Dichtfläche 25 des Ansatzes 24 gleitend auf die Dichtfläche 15 der Aufnahme 14 schieben, ohne dass merkliche Reibungen auftreten. Bei gleichem Anzugsdrehmoment wird das Kupplungselement 20 der Schraubkupplung 1 tiefer in das Kupplungselement 10 eingepresst und die Mutter 23 bei der Schraubkupplung 1 weiter gedreht als bei der Schraubkupplung 1', wo bereits zu einem früheren Zeitpunkt durch die zusätzliche reibschlüssige Verbindung zwischen den Dichtflächen 15, 25 eine gesetzte Schraubverbindung 1' vorgetäuscht wird. Sichtbar ist dies an den unterschiedlichen Drehstellungen der Muttern 23 der beiden Schraubkupplungen 1, 1' in den Figuren 1c und 2c.

Die vorbeschriebene Abdichtung mittels zweier konusförmiger Dichtflächen, wobei die metallischen Dichtflächen mit einer Schutzschicht aus einer ZnNi-Legierung und einer Gleitschicht aus Wachs versehen sind, kann auch auf andere Anwendungsfälle übertragen werden, wo zwei Dichtflächen zu einer Dichtflächenpaarung formschlüssig verbunden werden. Die Dichtflächen können dabei glatte metallische Dichtflächen sein, die als ebene Flächen, beispielsweise Stirnflächen von Kupplungen, aneinandergedrückt werden oder die Dichtflächen besitzen korrespondierende Wölbungen, ähnlich wie bei den Gewindegängen der Schraubverbindung. In jedem Fall wird verhindert, dass es bei der Verbindungsbildung zu plastischen Verformungen der Zink-Nickel-Legierung-Schutzschicht kommt und durch die plastische Verformung einerseits unnötige Kraft verbraucht und andererseits bei einer Schraubkupplungen ein dauerhaftes Setzen der Schraubverbindung verhindert wird.

### Bezugszeichenliste:

- 10: erstes Kupplungselement
- 11: Schlauchnippel
- 12: Außengewinde
- 14: Aufnahme
- 15: Dichtfläche von 14
- 20: zweites Kupplungselement
- 21: Schlauchnippel
- 22: Innengewinde
- 23: Mutter
- 24: Ansatz
- 25: Dichtfläche von 24
- 26: Ringnut
- 30: Dichtring

## Patentansprüche

1. Schraubkupplung mit zwei aus einem Stahlwerkstoff bestehenden Kupplungselementen (10, 20) zum lösbaren Verbinden von Hochdruckhydraulikleitungen,
wobei die Kupplungselemente (10, 20) für eine Schraubverbindung mit Verbindungsmitteln ausgestattet sind, nämlich an dem ersten Kupplungselement (10) ein Außengewinde (12) vorgesehenen ist, welches mit dem Innengewinde (22) einer Mutter (23) zusammenwirkt, die an dem zweiten Kupplungselement (20) beweglich gelagert ist,
wobei die Kupplungselemente (10, 20) zum dauerhaft abdichtenden Verbinden Dichtflächen (15, 25) besitzen, nämlich das eine Kupplungselement (10) eine Aufnahme (14) mit einer konusförmigen Dichtfläche (15) und das andere Kupplungselement (20) einen zur Aufnahme (14) adäquaten Ansatz (24) mit einer konusförmigen Dichtfläche (25) aufweist,
wobei zur Schraubverbindung zwischen den Kupplungselementen (10, 20) der konusförmige Ansatz (24) in der konusförmigen Aufnahme (14) aufgenommen wird,
wobei auf die konusförmige Dichtfläche (15) der Aufnahme (14) und auf die konusförmige Dichtfläche (25) des Ansatzes (24) eine raue Zink-Nickel-Legierungsschicht als Schutzschicht aufgebracht ist,
wobei auf die Gewindeflächen des Außengewindes (12) des ersten Kupplungselements (10) und des Innengewindes (22) der Mutter (23) des zweiten Kupplungselements (20) eine raue Zink-Nickel-Legierungsschicht als Schutzschicht aufgebracht ist,
wobei die Zink-Nickel-Legierungsschicht eine größere Härte als der Stahlwerkstoff der Kupplungselemente (10, 20) besitzt,
dass auf die raue Zink-Nickel-Legierungsschicht eine Gleitschicht aufgebracht ist, die beim Verbinden der Kupplungselemente (10, 20) ein dauerhaftes Setzen der Schraubverbindung ermöglicht,
**dadurch gekennzeichnet, dass** die Gleitschicht eine Schicht aus einem oder mehreren natürlichen und/oder synthetischen Wachsen ist.

2. Schraubkupplung nach Anspruch 1, **dadurch gekennzeichnet, dass** jedes Kupplungselement (10, 20) einen Schlauchnippel (11, 21) besitzt, an welchem ein Hochdruckschlauch mittels einer Pressfassung festlegbar ist.

3. Schraubkupplung nach Anspruch 1 oder 2, **dadurch gekennzeichnet, dass** die Zink-Nickel-Legierungsschutzschicht 10 bis 18 Gew% Nickel, vorzugsweise 12 bis 16 Gew% Nickel, enthält und mittels einer Chrom(III)-haltigen Verbindung passiviert ist.

4. Schraubkupplung nach einem der Ansprüche 1 bis 3, **dadurch gekennzeichnet, dass** die Zink-Nickel-Schutzschicht eine Dicke von mindestens 4 µm aufweist.

5. Schraubkupplung nach einem der Ansprüche 1 bis 4, **dadurch gekennzeichnet, dass** die Wachsschicht aus einem Wachs aus der Gruppe der Polyethylenwachse, besteht.

6. Schraubkupplung nach einem der Ansprüche 1 bis 5, **dadurch gekennzeichnet, dass** am konusförmigen Ansatz (24) eine Ringnut (26) für einen zusätzlichen Dichtring (30) vorgesehen ist.

## Claims

1. A screw coupling with two existing coupling elements (10, 20) made from a steel material for a detachable connection of hydraulic lines,
whereby, the coupling elements (10, 20) are equipped for a screw connection with connecting devices, namely an external thread (12) provided on the first coupling element (10) which operates together with the internal thread (22) of a nut (23), which is flexibly mounted on the second coupling element (20),
whereby, the coupling elements (10, 20) have connecting sealing surfaces (15, 25) for continuous sealing, namely that one coupling element (10) features a receptacle (14) with a tapered sealing surface (15) and the other coupling element (20) with a receptacle (14), with adequate attachment (24), with a tapered sealing surface (25),
whereby, the screw connection between the coupling elements (10, 22) of the tapered attachment (24) is accepted in the tapered receptacle (14),
whereby, a coarse zinc-nickel alloy layer is applied to the tapered sealing surface (15) of the receptacle (14) and to the tapered sealing surface (25) of the attachment (24) as protective coating,
whereby, the a coarse zinc-nickel alloy layer is applied to the threaded surface of the external thread (12) of the first coupling element (10) and the internal thread (22) of the nut (23) of the second coupling element (20) as protective coating,
whereby, the zinc-nickel alloy layer is of greater hardness than the steel material of the coupling elements (10, 20),
that an anti-friction layer is applied to the coarse zinc-nickel alloy layer which enables continuous seating of the screw connection when connecting the coupling elements (10,20),
**characterized in that,**
the anti-friction layer is a layer comprising of one or multiple natural and/or synthetic waxes.

2. A screw coupling in accordance with claim 1, **characterized in that** each coupling element (10, 20) has a nipple for a hose (11, 21) onto which a configurable highpressure hose can be attached using a press fitting.

3. A screw coupling in accordance with claim 1 or 2, **characterized in that** the zinc-nickel alloy protective layer contains 10 to 18% weight of nickel, preferably 12 to 16% weight nickel and is passivated using a compound containing chrome(III).

4. A screw coupling in accordance with one of the claims 1 to 3, **characterized in that** the zinc-nickel protective layer features a thickness of minimum 4 µm.

5. A screw coupling in accordance with one of the claims 1 to 4, **characterized in that** the layer of wax consists of a wax from the polyethylene group of waxes.

6. A screw coupling in accordance with one of the claims 1 to 5, **characterized in that** an annular groove (26) is provided on the tapered attachment (24) for an additional sealing ring (30).

## Revendications

1. Raccord à visser comprenant deux éléments raccords (10, 20) composés d'un matériau à base d'acier, pour permettre la liaison amovible de conduites hydrauliques haute pression,
sachant que les éléments raccords (10, 20) sont équipés de moyens de liaison pour obtenir une liaison vissée, à savoir que contre le premier élément raccord (10) est prévu un filetage extérieur (12) interagissant avec le taraudage intérieur (22) d'un écrou (23) en appui mobile contre le deuxième élément raccord (20),
sachant que l'éléments raccords (10, 20) présentent des surfaces d'étanchéité (15, 25) pour une liaison en permanence étanchéisante, à savoir qu'un élément raccord (10) présente un réceptacle (14) avec surface d'étanchéité (15) conique et que l'autre élément d'accouplement (20) présente un épaulement (24) adéquat à titre de réceptacle (14), épaulement qui présente une surface d'étanchéité (25) conique,
sachant que pour obtenir la liaison vissée entre les éléments d'accouplement (10, 20), l'épaulement conique (24) vient se loger dans le réceptacle conique (14),
sachant que sur la surface d'étanchéité (15) conique du réceptacle (14) et sur la surface d'étanchéité (25) conique de l'épaulement (24) a été appliquée une couche rugueuse d'alliage de zinc et de nickel officiant de couche de protection,
sachant que sur les surfaces filetées du filetage extérieur (12) du premier élément raccord (10) et du taraudage interne (22) de l'écrou (23) du deuxième élément raccord (20) a été appliquée une couche rugueuse d'alliage de zinc et de nickel officiant de couche de protection,
sachant que la couche d'alliage de zinc et de nickel possède une plus grande dureté que le matériau en acier des éléments raccords (10, 20),
que sur la couche rugueuse d'alliage de zinc et de nickel a été appliquée une couche glissante qui permet, lorsqu'on raccorde les éléments raccords (10, 20), un tassement durable du raccord à vis,
**caractérisé en ce que**
la couche glissante est une couche composée d'une ou plusieurs cires naturelles et/ou synthétiques.

2. Raccord à vis selon la revendication 1, **caractérisé en ce que** chaque élément raccord (10, 20) possède un nipple (11, 21) contre lequel il est possible de fixer un flexible haute pression au moyen d'un raccord serti.

3. Raccord à vis selon la revendication 1 ou 2, **caractérisé en ce que** la couche protectrice en alliage de zinc et de nickel contient entre 10 et 18 % pondéraux de nickel, de préférence entre 12 et 16 % pondéraux de nickel, et qu'elle a été passivée au moyen d'un composé contenant du chrome (III).

4. Raccord à vis selon l'une des revendications 1 à 3, **caractérisé en ce que** la couche de protection en zinc et nickel présente une épaisseur d'au moins 4 microns.

5. Raccord à vis selon l'une des revendications 1 à 4, **caractérisé en ce que** la couche de cire se compose d'une cire appartenant au groupe des cires polyéthyléniques.

6. Raccord à vis selon l'une des revendications 1 à 5, **caractérisé en ce que** contre l'épaulement (24) conique est prévue une gorge annulaire (26) pour recevoir une bague d'étanchéité (30) supplémentaire.
